Europäisches Patentamt

European Patent Office

Office européen des brevets

(11) Publication number: **0 584 637 A2**

## EUROPEAN PATENT APPLICATION

(21) Application number: **93112795.5**

(22) Date of filing: **10.08.93**

(51) Int. Cl.⁵: **H04N 1/00**

(30) Priority: **27.08.92 JP 250390/92**

(43) Date of publication of application:
**02.03.94 Bulletin 94/09**

(84) Designated Contracting States:
**AT CH DE FR GB IT LI NL SE**

(71) Applicant: **Komori Corporation**
**11-1, Azumabashi 3-chome**
**Sumida-ku Tokyo(JP)**

(72) Inventor: **Tanaka, Kimihiro, c/o Toride Plant**
**Komori Corporation,**
**5-1, Higashi 4-chome**
**Toride-shi, Ibaragi(JP)**
Inventor: **Kojima, Shinichi, c/o Toride Plant**
**Komori Corporation,**
**5-1, Higashi 4-chome**
**Toride-shi, Ibaragi(JP)**
Inventor: **Okuda, Tetsuya, c/o Toride Plant**
**Komori Corporation,**
**5-1, Higashi 4-chome**
**Toride-shi, Ibaragi(JP)**

(74) Representative: **Pfenning, Meinig & Partner**
**Mozartstrasse 17**
**D-80336 München (DE)**

(54) Method and apparatus for recognizing meandering in printed matter test system and method and apparatus for correcting image pickup position in this system.

㉗ In a method of recognizing meandering of a web, with respect to the reference image data, one side 1A of a rectangular meandering recognition block $\Phi$ is set parallel to a printing traveling direction Y at a position where mA1 pixels of an output P(A) are located on one side of the one side 1A and mA2 pixels of the output P(A) are located on the other side thereof, and an opposite side 1B of the one side 1A of the meandering recognition block $\Phi$ is set parallel to the direction Y at a position where mB1 pixels of an output P(B) are located on one side of the opposite side 1B and mB2 pixels are located on the other side of the opposite side 1B. With respect to the test image data, a meandering recognition block $\Phi_D$ having the same shape as that of the block $\Phi$ is set at a position corresponding to the block $\Phi$ set with respect to the reference image data. A difference $\Delta P(\Phi)$ between a sum $P(\Phi)$ of output data of all pixels included in the block $\Phi$ and a sum $P(\Phi_D)$ of output data of all pixels included in the block $\Phi_D$ is calculated. A difference $\Delta P(\Phi_n)$ between a product of the output P(B) and a pixel count $\underline{n}$ of the block $\Phi$ in the direction Y and a product of the output P(A) and the pixel count $\underline{n}$ is calculated. A meandering amount and direction of the web are obtained on the basis of the absolute value and the sign of a quotient obtained by dividing the difference $\Delta P(\Phi)$ by the difference $\Delta P(\Phi_n)$.

FIG.1

Background of the Invention

The present invention relates to a method and apparatus for recognizing meandering of a printed web as a test object in printed matter test system for comparing test image data obtained by the printed web with prestored reference image data to detect defective printed matter, and a method and apparatus for correcting an image pickup position in this system.

In recent printing presses, density data (pixel or output data) of each pixel of reference printed matter is input as reference image data using an image processing means having an optical image pickup system, each density data of target printed matter is input as test image data using the same image processing means, and the reference image data is compared with the test image data to automatically detect defective printed matter.

Defective printed matter test system of this type includes an image pickup means such as a CCD camera or line sensor, a signal processing circuit for processing an electrical signal as an output signal from this image pickup means, and a reference signal generating means for supplying a reference signal to the signal processing circuit to be processed thereby. The levels of density data of corresponding pixels are compared using the reference image data stored in a reference memory and test image data stored in a test memory to determine whether the difference between these two levels is smaller than a predetermined value, thereby determining defective/nondefective printed matter.

The reference printed matter is nondefective printed matter on which actually printed contents are visually determined to be nondefective upon test printing at the start of printing.

In this conventional defective printed matter test system, however, when a web as a test object meanders during printing, the positions of the corresponding pixels represented by the reference image data and the test image data are slightly shifted, and this shift is determined to be defective.

In a general rotary press, the web slowly meanders during printing due to variations in tension. For this reason, the positions of the corresponding pixels represented by the reference image data and the test image data are gradually shifted from each other. The difference between the levels of the reference image data and the test image data is then gradually increased. Although the resultant printed matter can be sufficiently circulated as commercial printed matter, it is determined to be defective, resulting in inconvenience.

Summary of the Invention

It is an object of the present invention to provide printed matter test system which inhibits to determine that printed matter which can be satisfactorily circulated as commercial printed matter is defective printed matter even if a web meanders.

In order to achieve the above object according to an aspect of the present invention, there is provided a method of recognizing meandering of a web in printed matter test system for causing a reference memory to store output data of each pixel of reference printed matter as reference image data, inputting, as test image data, output data of each pixel of printed matter as a test object obtained by printing information on the web, and comparing the reference image data with the test image data, thereby detecting defective printed matter, comprising the steps of, setting, with respect to the reference image data, one side 1A of a rectangular meandering recognition block $\Phi$ to be parallel to a printing traveling direction Y at a position where mA1 pixels of an output P(A) are located on one side of the one side 1A and mA2 pixels of the output P(A) are located on the other side thereof, and setting an opposite side 1B of the one side 1A of the meandering recognition block $\Phi$ to be parallel to the printing traveling direction Y at a position where mB1 pixels of an output P(B) are located on one side of the opposite side 1B and mB2 pixels are located on the other side of the opposite side 1B, setting, with respect to the test image data, a meandering recognition block $\Phi_D$ having the same shape as that of the meandering recognition block $\Phi$ at a position corresponding to the meandering recognition block $\Phi$ set with respect to the reference image data, calculating a difference $\Delta P(\Phi)$ between a sum $P(\Phi)$ of output data of all pixels included in the meandering recognition block $\Phi$ and a sum $P(\Phi_D)$ of output data of all pixels included in the meandering recognition block $\Phi_D$, calculating a difference $\Delta P(\Phi_n)$ between a product of the output P(B) and a pixel count $\underline{n}$ of the meandering recognition block $\Phi$ in the traveling direction Y and a product of the output P(A) and the pixel count $\underline{n}$, and obtaining a meandering amount and a meandering direction of the web on the basis of an absolute value and a sign of a quotient obtained by dividing the difference $\Delta P(\Phi)$ by the difference $\Delta P(\Phi_n)$.

In order to achieve the above object according to another aspect of the present invention, there is provided an apparatus for recognizing meandering of a web in printed matter test system for causing a reference memory to store output data of each pixel of reference printed matter as reference image data, inputting, as test image data, output data of each pixel of printed matter as a test object obtained by printing information on the web, and comparing the reference image data with the test image data, thereby detecting defective printed matter, comprising a rectangular meandering recognition block $\Phi$ set with respect to the reference image data such that one side 1A of the rectangular meandering recognition block $\Phi$ is set parallel to a printing traveling direction Y at a position where mA1 pixels of an output P(A) are located on one side of the one side 1A and mA2 pixels of the output P(A) are located on the other side thereof, and such that an opposite side 1B of the one side 1A of the meandering recognition block $\Phi$ is set parallel to the printing traveling direction Y at a position where mB1 pixels of an output P(B) are located on one side of the opposite side 1B and mB2 pixels are located on the other side of the opposite side 1B, a meandering recognition block $\Phi_D$ having the same shape as that of the meandering recognition block $\Phi$ and set with respect to the test image data at a position corresponding to the meandering recognition block $\Phi$ set with respect to the reference image data, and meandering recognizing means for calculating a difference $\Delta P(\Phi)$ between a sum $P(\Phi)$ of output data of all pixels included in the meandering recognition block $\Phi$ and a sum $P(\Phi_D)$ of output data of all pixels included in the meandering recognition block $\Phi_D$, calculating a difference $\Delta P(\Phi_n)$ between a product of the output P(B) and a pixel count $\underline{n}$ of the meandering recognition block $\Phi$ in the traveling direction Y and a product of the output P(A) and the pixel count $\underline{n}$, and obtaining a meandering amount and a meandering direction of the web on the basis of an absolute value and a sign of a quotient obtained by dividing the difference $\Delta P(\Phi)$ by the difference $\Delta P(\Phi_n)$.

According to the present invention, using the difference $\Delta P(\Phi)$ between the sum $P(\Phi)$ of the output data of all the pixels included in the meandering recognition block $\Phi$ and the sum $P(\Phi_D)$ of the output data of all the pixels included in the meandering recognition block $\Phi_D$, the amount of change in the sum $P(\Phi_D)$ with respect to the sum $P(\Phi)$, which is caused by storage of the test image data shifted from the reference image data in the test memory, is obtained. For example, if test image data is stored in the test memory upon being shifted from the corresponding reference image data by one pixel in one direction due to web meandering, the sum $P(\Phi_D)$ of the output data of all the pixels included in the meandering recognition block $\Phi_D$ is decreased from the sum $P(\Phi)$ by P(A)·n and increased from the sum $P(\Phi)$ by P(B)·n. That is, if P(B) is larger than P(A), the sum $P(\Phi_D)$ is increased by $\Delta P(\Phi_n) = P(B)·n - P(A)·n$. For this reason, when the difference $\Delta P(\Phi)$ between the sums $P(\Phi)$ and $P(\Phi_D)$ is divided by $\Delta P(\Phi_n)$, the stored test image data shift amount corresponding to a pixel count in a predetermined direction can be detected in accordance with the absolute value and sign of the quotient. Therefore, the direction and amount of web meandering can be obtained on the basis of the shift amount and its direction.

According to the present invention, the image pickup position of the image pickup means for picking up a test object as an image can be corrected on the basis of the resultant web meandering amount and its direction. By this correction of the image pickup position, the position represented by the next test image data is matched with that represented by the reference image data stored in the reference memory. Therefore, the same state as in a non-meandered state of the web can be obtained.

Brief Description of the Drawings

Fig. 1 is a block diagram showing the circuit arrangement according to an embodiment of the present invention;
Fig. 2 is a view showing the main part of a drive mechanism for shifting the position (image pickup position) of a scanning head;
Fig. 3 is a view showing a relationship between a meandering recognition block $\Phi$ set for a reference memory and reference image data;
Fig. 4 is a view showing a relationship between a meandering recognition block $\Phi_D$ set for a test memory and rest image data; and
Fig. 5 is a block diagram showing the main part of an arrangement for correcting test image data stored in the test memory in accordance with the meandering amount and its direction.

Description of the Preferred Embodiment

The present invention will be described in detail with reference to a preferred embodiment in conjunction with the accompanying drawings.

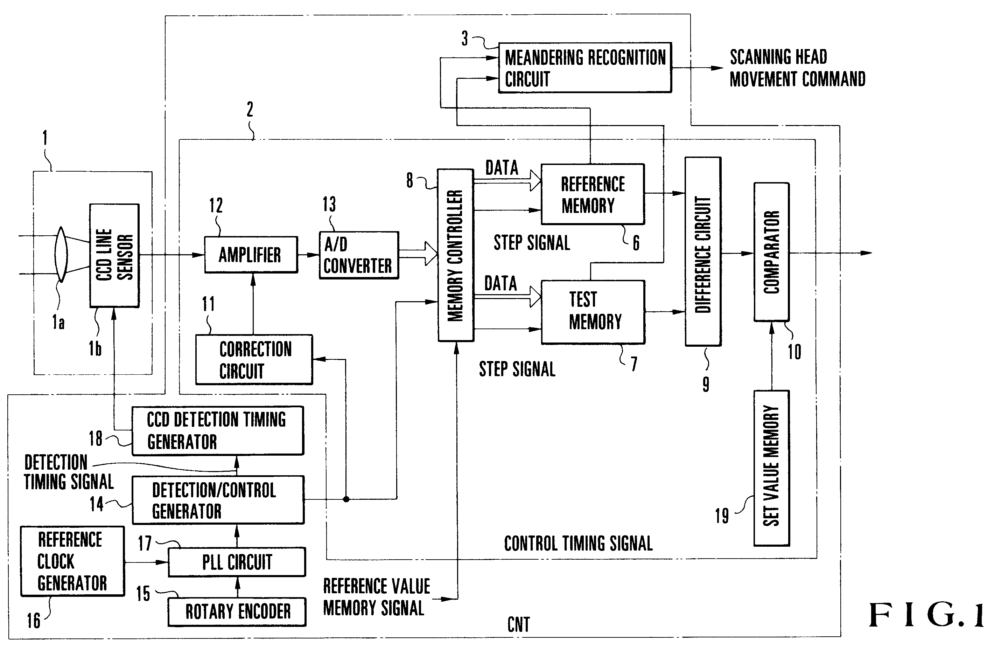

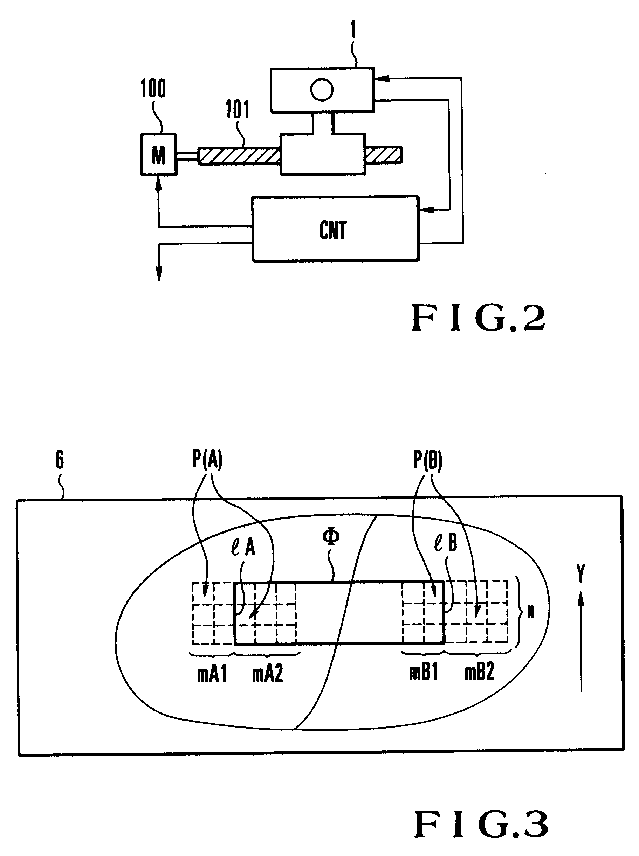

Fig. 1 shows the circuit arrangement according to an embodiment of the present invention. A scanning head 1 serving as an image pickup means comprises an optical system such as a lens 1a and a CCD line sensor 1b for converting an image focused through the optical system into a corresponding electrical signal. The scanning head 1 images the resultant printed matter. A feed screw 101 is rotated through a motor 100 to change the position (image pickup position) of the scanning head 1, as shown in Fig. 2.

Referring to Fig. 1, a signal processing circuit 2 surrounded by an alternate long and short dashed line comprises a reference memory 6 for receiving and storing reference image data, a test memory 7 for receiving and storing test image data, a memory controller 8, a difference circuit 9, a comparator 10, a correction circuit 11, an amplifier 12, an A/D converter 13, and a set value memory 19.

The signal processing circuit 2 is controlled by a control timing signal and a reference value memory signal. The control timing signal is an output signal from a detection/control timing generator 14 and comprises a reference signal as a pulse signal rising every revolution of a plate cylinder (not shown) and a clock pulse as a read/write pulse signal rising every revolution of the plate cylinder through a predetermined angle. The control timing signal is supplied to the memory controller 8 and the correction circuit 11. The reference value memory signal is supplied to the memory controller 8 when a switch (not shown) is turned on.

The detection/control timing generator 14 comprises an up/down counter. The time intervals of a detection timing signal and a printing timing signal which are output signals from the up/down counter are changed in accordance with the rotational speed of a printing press which is detected by a rotary encoder 15 serving as a rotation detecting means. At this time, a PLL circuit 17 compares a reference clock pulse as an output signal from a reference clock generator 16 with the rotational speed pulse signal as the output signal from the rotary encoder 15. The PLL circuit 17 then controls the detection/control timing generator 14 so as to cause the detection timing signal and the control timing signal to correspond to the rotational speed of the printing press. A CCD detection timing generator 18 receives the detection timing signal to control the CCD line sensor 1b every revolution of the plate cylinder and causes the signal processing circuit 2 to receive a video signal from the CCD line sensor 1b.

In this embodiment, the read timing of the video signal from the CCD line sensor 1b and the signal processing timing of the signal processing circuit 2 are changed to follow the rotational speed of the printing press (i.e., the rotational speed of the plate cylinder) which is detected by the rotary encoder 15.

Reference numeral 3 denotes a meandering recognition circuit for receiving the reference image data stored in the reference memory 6 and the test image data stored in the test memory 7 to obtain sums $P(\Phi)$ and $P(\Phi_D)$ of density data (output data) of all pixels included in meandering recognition blocks $\Phi$ and $\Phi_D$ (to be described later) in the reference memory 6 and the test memory 7. The meandering recognition circuit 3 also performs a predetermined arithmetic operation to obtain the amount and direction of meandering of a web being printed as a test object, and supplies a scanning head movement command to the motor 100.

Defective printed matter test operation in this apparatus, i.e., the basic function thereof will be described below.

At the start of printing, the state of actual printed matter is visually checked during test printing. If the resultant printed matter is determined to be nondefective, the switch is turned on to send a reference value memory signal. When a detection timing signal representing the reference position and a control timing signal are then output from the detection/control timing generator 14, reference image data from the reference printed matter is loaded in the reference memory 6. This loading operation is performed in accordance with the detection timing signal and the control timing signal, both of which are output from the detection/control timing generator 14 controlled in response to the clock pulse from the rotary encoder 15.

After the reference image data is stored in the reference memory 6, as described above, test image data obtained from printed matter as a test object, i.e., a web being printed as a test object is loaded in the test memory 7 during rotation of the plate cylinder.

The difference circuit 9 calculates the difference of levels of corresponding density data (output data) represented by the reference image data stored in the reference memory 6 and the test image data stored in the test memory 7 and supplies the resultant level difference to the comparator 10. The comparator 10 compares the input level difference with a set value stored in the set value memory 19. If the input level difference is larger than the set value, the comparator 10 outputs a comparison output representing defective printed matter.

An image pickup position correction operation (additional function), unique to this embodiment, performed simultaneously with the above defective printed matter test operation (basic function) will be described together with the function of the meandering recognition circuit 3.

The meandering recognition circuit 3 receives the reference image data stored in the reference memory 6 and the test image data stored in the test memory 7. The meandering recognition circuit 3 calculates the sums $P(\Phi)$ and $P(\Phi_D)$ of the density data (output data) included in the meandering recognition blocks $\Phi$ and $\Phi_D$ set in the reference memory 6 and the test memory 7. The meandering recognition circuit 3 then performs a predetermined arithmetic operation to obtain the amount and direction of meandering of a web being printed as a test object and outputs a scanning head movement command to the motor 10.

The meandering recognition block $\Phi$ for the reference memory 6 is automatically or manually preset to satisfy the conditions to be described below. Fig. 3 is a view showing a relationship between a meandering recognition block $\Phi$ set for the reference memory 6 and reference image data.

The meandering recognition block $\Phi$ is set in the reference memory 6 to satisfy the following six conditions ① to ⑥.

① The shape of the meandering recognition block $\Phi$ is rectangular, and two opposite sides 1A and 1B of the block are parallel to a traveling direction (web traveling direction) Y in printing.

② One side 1A of the meandering recognition block $\Phi$ is set at a position where mA1 pixels having the same density (output) P(A) are set on one side and mA2 pixels having the same density (output) P(A) are set on the other side.

③ One side 1B of the meandering recognition block $\Phi$ is located at a position where mB1 pixels having the same density (output) P(B) are set on one side and mB2 pixels having the same density (output) P(B) are set on the other side.

④ A difference between the density (output) P-(A) of a portion near the side 1A of the meandering recognition block $\Phi$ and the density (output) P(B) of a portion near the side 1B thereof is sufficiently large.

⑤ The lengths of the pixels mA1, mA2, mB1, and mB2 are much larger than an expected length of a positional shift of the test image data which is caused by meandering.

⑥ The meandering recognition block $\Phi$ is a set of pixels, and the length of each of the sides 1A and 1B (depth of the meandering recognition block $\Phi$) corresponds to n (n = 1 or more) pixels.

When the meandering recognition block $\Phi$ is to be manually set, reference image data to be stored in the reference memory 6 is displayed as an image or a color-separated image on a display (not shown). The operator sets the meandering recognition block $\Phi$ to satisfy conditions ① to ⑥ above while checking the display screen.

The amount and direction of meandering are calculated by the meandering recognition circuit 3 as follows.

The meandering recognition circuit 3 receives reference image data from the reference memory 6 and obtains the sum P($\Phi$) of the density (output) data of all the pixels included in the meandering recognition block $\Phi$. A meandering recognition block $\Phi_D$ having the same shape as that of the meandering recognition block $\Phi$ is set in the test memory 7 at a position corresponding to the meandering recognition block $\Phi$ set for the reference memory 6. The meandering recognition circuit 3 receives the test image data from the test memory 7 to obtain the sum P($\Phi_D$) of the density (output) data of all the pixels included in the meandering recognition block $\Phi_D$.

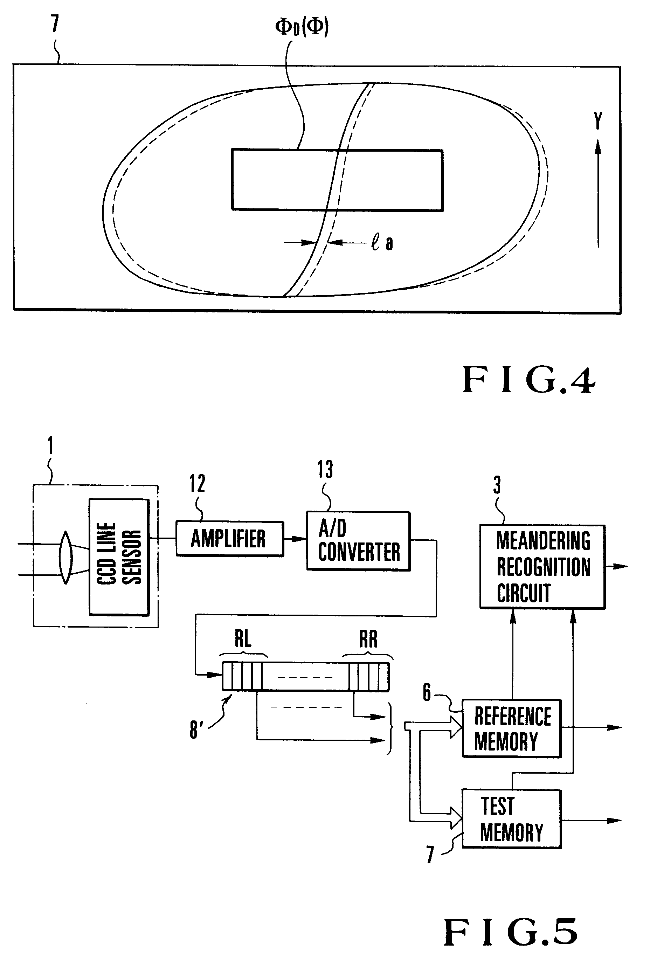

Fig. 4 shows a relationship between the meandering recognition block $\Phi_D$ set for the test memory 7 and the test image data. Referring to Fig. 4, broken lines explicitly indicate reference pattern data stored in the reference memory 6. Test pattern data corresponding to this reference pattern data is shifted by $\ell$a pixels in the left direction (Fig. 4) and stored, as indicated by a solid line in Fig. 4. However, the corresponding positions of the meandering recognition block $\Phi$ and the meandering recognition block $\Phi_D$ match each other.

The meandering recognition circuit 3 substitutes the resultant sums P($\Phi$) and P($\Phi_D$) into equation (1) to obtain the amount and direction of meandering of a web being printed as a test object:

$$\ell = L \cdot [P(\Phi) - P(\Phi_D)]/\{[P(B) - P(A)] \cdot n\} = L \cdot \Delta P(\Phi)/\Delta P(\Phi_n) \qquad (1)$$

In equation (1), L is the width per pixel on the actual printed matter (i.e., the width of the web in a direction perpendicular to the web traveling direction), $\Delta P(\Phi) = P(\Phi) - P(\Phi_D)$, $\Delta P(\Phi_n) = [P(B) - P(A)] \cdot n$, $\ell$ is the meandering amount, and the sign of this meandering amount $\ell$ represents the meandering direction.

The meandering recognition circuit 3 calculates the difference $\Delta P(\Phi)$ between the sums P($\Phi$) and P($\Phi_D$) and then a difference $\Delta P(\Phi_n)$ between P(B)$\cdot$n and P(A)$\cdot$n. The meandering recognition circuit 3 divides the difference $\Delta P(\Phi)$ by the difference $\Delta P(\Phi_n)$ to obtain a shift amount $\ell$a corresponding to the pixels of the test and reference image data. The shift amount $\ell$a is multiplied with L to obtain the web meandering amount $\ell$. At this time, the sign of the meandering amount $\ell$ represents the meandering direction. If the sign of the meandering amount is positive, the web traveling direction is the left direction. However, if the sign of the meandering amount is negative, the web traveling direction is the right direction.

For example, if the original test image data is shifted by one pixel on one side (in the left direction in Fig. 4) due to web meandering in the left direction with respect to the web traveling direction, and the shifted data is stored in the test memory 7, the sum P($\Phi_D$) of the density (output) data of all the pixels included in the meandering recognition block $\Phi_D$ is reduced by P(A)$\cdot$n and increased by P(B)$\cdot$n with respect to the sum P($\Phi$). If P(B) is larger than P(A), the sum P($\Phi_D$) is increased by P(B)$\cdot$n - P(A)$\cdot$n = $\Delta P(\Phi_n)$. The difference $\Delta P(\Phi) = \Delta P(\Phi_n)$ between P($\Phi$) and P($\Phi_D$) is divided by $\Delta P(\Phi_n)$ to obtain $\ell$a = +1. $\ell$ = +L is set to obtain the meandering amount and direction of the web.

The meandering recognition circuit 3 sends a scanning head movement command corresponding to the resultant meandering amount and direction to the motor 100. The feed screw 101 is rotated by the designated amount in the designated direction to correct the image pickup position of the scanning head 1. By this correction of the image pickup position, the position of the next test image data to be input and stored in the test memory 7 coincides with the position of the reference image data stored in the reference memory 6. The same state as in the non-meandered state of the web can be obtained.

In the above embodiment, one meandering block $\Phi$ for the reference memory 6 and one meandering block $\Phi_D$ for the test memory 7 are set. However, a plurality of meandering blocks may be set for each memory. In this case, web meandering amounts are obtained using the meandering recognition blocks $\Phi$ and $\Phi_D$ in the same manner as described above, and the resultant meandering amounts are arithmetically averaged to obtain the final meandering amount and direction.

In the above embodiment, the meandering recognition block $\Phi$ is set in the reference pattern data in the reference memory 6. However, the meandering recognition block $\Phi$ may be set to include the end of printing paper if this block satisfies conditions ① to ⑥ described above. Alternatively, a meandering recognition memory independent of the reference memory 6 may be arranged.

In the above embodiment, the input test image data is stored in the test memory 7 and is then processed. However, the input test image data may be sequentially processed in real time in an input order without being stored in the test memory 7.

In the above embodiment, the image pickup position of the scanning head 1 is corrected in accordance with the meandering amount and direction which are obtained by the meandering recognition circuit 3. However, if the read width (i.e., a direction perpendicular to the web traveling direction) of the scanning head 1 is sufficiently larger than the width of the printed matter as the test object, i.e., if the test object sufficiently falls within the read region of the scanning head 1 even upon occurrence of web meandering, test image data read by the scanning head 1 is shifted by a pixel count closest to a meandering amount in accordance with the meandering amount and direction which are obtained in the meandering recognition circuit 3, and the shifted test image data is stored in the test memory 7. Therefore, the position of the test data stored in the test memory 7 almost coincides with the position of the reference image data stored in the reference memory 6, and almost the same state as in the non-meandered state of the web can be obtained. In this case, the pixel width is set small enough to effectively perform correction.

In Fig. 5, a shift register 8' having a capacity of storing a pixel data array corresponding to the length of the scanning head 1 is used in place of the memory controller 8 shown in Fig. 1. Only central pixel data except for RL pixel data from the left end of the shift register 8' and RR pixel data from the right end thereof are stored in the reference memory 6 and the test memory 7. When a meandering amount and direction are obtained by the meandering recognition circuit 3, test image data to be stored in the test memory 7 is corrected from the test object in accordance with the following procedures.

① One pixel data array of the scanning head 1 is stored in the shift register 8'.

② A value K is set so that K pixels each having a width L have a value closest to the meandering amount $\ell$.

③ Data in the shift register 8' is shifted by K pixels in the meandering direction.

In this case, the pixel width is set small enough to effectively perform correction.

As has been described above, according to the present invention, the difference $\Delta P(\Phi)$ between the sum $P(\Phi)$ of the output data of all the pixels included in the meandering recognition block $\Phi$ and the sum $P(\Phi_D)$ of the output data of all the pixels included in the meandering recognition block $\Phi_D$ is obtained. The difference $\Delta P(\Phi_n)$ between the product of the output $P(B)$ and the pixel count $\underline{n}$ of the meandering recognition block $\Phi$ in the traveling direction Y and the product of the output $P(A)$ and the pixel count $\underline{n}$ is obtained. The difference $\Delta P(\Phi)$ is divided by the difference $\Delta P(\Phi_n)$ to obtain a quotient. The meandering amount and direction are obtained from the absolute value of the quotient and its sign. For this reason, the meandering amount can be measured with a precision of a size smaller than the width L of one pixel. At the same time, the image pickup position of the image pickup means is corrected on the basis of the obtained measuring amount and direction of the web. The position of the next test image data coincides with the position of the reference image data stored in the reference memory, and the same state as in the non-meandered state of the web can be obtained. The printed matter which can be satisfactorily circulated as a commercial product will not be erroneously determined as defective printed matter.

## Claims

1. A method of recognizing meandering of a web in printed matter test system for causing a reference memory to store output data of each pixel of reference printed matter as reference image data, inputting, as test image data, output data of each pixel of printed matter as a test object obtained by printing information on said web, and comparing the reference image data with the test image data, thereby detecting defective printed matter, characterized by comprising the steps of:

setting, with respect to the reference image data, one side 1A of a rectangular meandering recognition block $\Phi$ to be parallel to a printing traveling direction Y at a position where mA1 pixels of an output P(A) are located on one side of said one side 1A and mA2 pixels of the output P(A) are located on the other side thereof, and setting an opposite side 1B of said one side 1A of said meandering recognition block $\Phi$ to be parallel to the printing traveling direction Y at a position where mB1 pixels of an output P(B) are located on one side of said opposite side 1B and mB2 pixels are located on the other side of said opposite side 1B;

setting, with respect to the test image data, a meandering recognition block $\Phi_D$ having the same shape as that of said meandering recognition block $\Phi$ at a position corresponding to the meandering recognition block $\Phi$ set with respect to the reference image data;

calculating a difference $\Delta P(\Phi)$ between a sum P($\Phi$) of output data of all pixels included in the meandering recognition block $\Phi$ and a sum P($\Phi_D$) of output data of all pixels included in the meandering recognition block $\Phi_D$;

calculating a difference $\Delta P(\Phi_n)$ between a product of the output P(B) and a pixel count $\underline{n}$ of said meandering recognition block $\Phi$ in the traveling direction Y and a product of the output P(A) and the pixel count $\underline{n}$; and

obtaining a meandering amount and a meandering direction of said web on the basis of an absolute value and a sign of a quotient obtained by dividing the difference $\Delta P(\Phi)$ by the difference $\Delta P(\Phi_n)$.

2. An apparatus for recognizing meandering of a web in printed matter test system for causing a reference memory to store output data of each pixel of reference printed matter as reference image data, inputting, as test image data, output data of each pixel of printed matter as a test object obtained by printing information on said web, and comparing the reference image data with the test image data, thereby detecting defective printed matter, characterized by comprising:

a rectangular meandering recognition block $\Phi$ set with respect to the reference image data such that one side 1A of the rectangular meandering recognition block $\Phi$ is set parallel to a printing traveling direction Y at a position where mA1 pixels of an output P(A) are located on one side of said one side 1A and mA2 pixels of the output P(A) are located on the other side thereof, and such that an opposite side 1B of said one side 1A of said meandering recognition block $\Phi$ is set parallel to the printing traveling direction Y at a position where mB1 pixels of an output P(B) are located on one side of said opposite side 1B and mB2 pixels are located on the other side of said opposite side 1B;

a meandering recognition block $\Phi_D$ having the same shape as that of said meandering recognition block $\Phi$ and set with respect to the test image data at a position corresponding to the meandering recognition block $\Phi$ set with respect to the reference image data; and

meandering recognizing means (3) for calculating a difference $\Delta P(\Phi)$ between a sum P($\Phi$) of output data of all pixels included in the meandering recognition block $\Phi$ and a sum P($\Phi_D$) of output data of all pixels included in the meandering recognition block $\Phi_D$, calculating a difference $\Delta P(\Phi_n)$ between a product of the output P(B) and a pixel count $\underline{n}$ of said meandering recognition block $\Phi$ in the traveling direction Y and a product of the output P(A) and the pixel count $\underline{n}$, and obtaining a meandering amount and a meandering direction of said web on the basis of an absolute value and a sign of a quotient obtained by dividing the difference $\Delta P(\Phi)$ by the difference $\Delta P(\Phi_n)$.

3. A method of correcting an image pickup position in printed matter test system for causing a reference memory to store output data of each pixel of reference printed matter as reference image data, inputting, as test image data, output data of each pixel of printed matter as a test object obtained by printing information on a web, and comparing the reference image data with the test image data, thereby detecting defective printed matter, characterized by comprising the steps of:

obtaining a meandering amount and a meandering direction of said web; and

correcting the image pickup position of image pickup means for imaging the test object on the basis of the meandering amount and meandering direction of said web.

4. An apparatus for correcting an image pickup position in printed matter test system for causing a reference memory to store output data of each pixel of reference printed matter as reference image data, inputting, as test image data, output data of each pixel of printed matter as a test object obtained by printing information on a web, and comparing the reference image data with the test image data, thereby detecting defective printed matter, characterized by comprising:

meandering recognizing means (3) for obtaining a meandering amount and a meandering direction of said web; and

image pickup position correcting means (100, 101) for correcting the image pickup position of image pickup means for imaging the test object on the basis of the meandering amount and meandering direction of said web obtained by said meandering recognizing means.

FIG.1

EP 0 584 637 A2

FIG.2

FIG.3

$\Phi_D(\Phi)$

7

Y

ℓa

# FIG.4

1

12

13

3

CCD LINE SENSOR

AMPLIFIER

A/D CONVERTER

MEANDERING RECOGNITION CIRCUIT

RL          RR

8'

6

REFERENCE MEMORY

7

TEST MEMORY

# FIG.5